# EUROPÄISCHE PATENTSCHRIFT

(11) **EP 1 506 533 B1**
(45) Veröffentlichungstag und Bekanntmachung des Hinweises auf die Patenterteilung: **05.04.2006**
(21) Anmeldenummer: 03718781.2
(22) Anmeldetag: 22.04.2003
(51) Int. Cl.: G07C 5/00

(54) **VERFAHREN ZUM ÜBERMITTELN VON FAHRZEUGDATEN**
METHOD FOR TRANSMITTING VEHICLE DATA
PROCEDE DE TRANSMISSION DE DONNEES DE VEHICULE

(30) Priorität: 17.05.2002 DE 10222141
(43) Veröffentlichungstag der Anmeldung: 16.02.2005
(73) Patentinhaber: Bayerische Motoren Werke Aktiengesellschaft, 80809 München (DE)
(72) Erfinder: GUMPINGER, Franz, 81375 München (DE)
(86) Internationale Anmeldenummer: PCT/EP2003/004123
(87) Internationale Veröffentlichungsnummer: WO 2003/098557

(56) Entgegenhaltungen:
- EP-A- 0 378 945
- EP-A- 1 069 542
- EP-A- 1 229 475
- DE-A- 19 543 784
- DE-A- 19 608 232
- DE-A- 19 710 393
- DE-A- 19 919 501

## Beschreibung

Die Erfindung betrifft ein Verfahren zur drahtlosen Übermittlung von Fahrzeugdaten, bei dem für den Datenexport vorgesehene Fahrzeugdaten in einem Speichermedium gespeichert, im Rahmen einer Fahrzeugdatenerfassung, z.B. Fahrzeugdiagnose, ausgelesen und übertragen werden.

Bekannt ist ein solches Verfahren aus der DE 199 48 663 A1 mit Einsatz des Fahrzeugschlüssels oder einer Chipkarte oder Transponders mit integriertem Speicher. Dieser dient für die Fahrzeugdaten als Zwischenspeicher, bevor diese Daten über Kontakt oder Funk übermittelt werden.

Aus der DE 196 50 047 A1 ist es bereits bekannt, die Fahrzeugdaten über eine Kommunikationsverbindung, z.B. ein Autotelefon, selbsttätig oder auf einen Befehl der Fahrers an die Service-Station zu übermitteln. Nach Vorliegen der Daten zur Fahrzeugidentifikation (Typ, Modelljahr, Fahrgestellnummer, Halter), ferner Inhalt von Fehlerspeichern, Steuergeräten, kann dann die Service-Station den Umfang der Arbeiten abschätzen und einen Termin vorschlagen, so daß sich der Besuch des Fahrers bei der Service-Station verkürzt.

Die DE 195 45 888 A1 betrifft ebenfalls eine drahtlose Diagnosedatenübermittlung, wobei auch die Überlegung erörtert wird, die Diagnosedaten bei Einfahrt des Fahrzeugs in den Service-Bereich abzufragen. Vorgeschlagen wird die Verwendung eines Schlüssels, der eine Fahrzeugkennung gespeichert enthält, um das Senden von Diagnosedaten vom Fahrzeug freizugeben.

Das Dokument DE 19710393 A1 offenbart ein Verfahren sowie ein Gerät zur Dokumentation von Fahrzeugdaten mit deren Speicherung in einem Speichermedium, wobei ältere eingespeicherte Daten regelmäßig durch aktuelle Daten ersetzt werden.

Das Dokument DE 19919501 A1 zeigt eine Vorrichtung zur Speicherung betriebsabhängiger Fahrzeugdaten im Fahrzeugschlüssel.

Es hat sich in der Praxis als nachteilig erwiesen, daß ein Zwischenspeicher beispielsweise im Falle eines Schlüssels nur begrenzten Speicherplatz umfaßt, so daß es nicht möglich ist, Fehlerspeicher- und Prüfdaten an die Service-Station auf diesem Wege zu übermitteln. Eine Erweiterung des Schlüsselspeichers bringt Hard- und Softwaremehraufwand mit sich. Außerdem ist die Speichereinlesezeit länger. Das rasche Abziehen des Schlüssels durch den Fahrer bei Fahrtende kann zu Problemen führen.

Der Erfindung liegt die Aufgabe zugrunde, ein Verfahren zur drahtlosen Fahrzeugdatenübermittlung zu schaffen, bei dem bei dem Einlesen von Fahrzeugdaten in den Speicher bei Fahrtende kein Zeitproblem auftritt und das sich kostengünstig realisieren läßt.

Diese Aufgabe ist erfindungsgemäß bei einem Verfahren mit den Merkmalen des Anspruchs 1 gelöst. Vorteilhafte Weiterbildungen sind Gegenstand der abhängigen Ansprüche.

Wesentliches Merkmal des erfindungsgemäßen Verfahrens ist die Speicherung des Hauptteils der Daten zu Fahrtbeginn. Zweckmäßig werden die für den Datenexport vorgesehenen Daten etwa im zentralen Datenspeicher und/oder im betreffenden Speichermedium (z.B. Speicherkarte, Schlüsselspeicher) gespeichert. Die zur Aktualisierung der zusätzlichen Daten bei Fahrtende benötigte Übertragungszeit ist durch die vorab erfolgte Speicherung der bereits vorhandenen Daten verkürzt. Es werden beispielsweise nur noch die Kilometerzahl, neuen Fehlerspeicherdaten, neue Check-Control-Daten oder Fahrzeugzustandsdaten neu gespeichert.

Sind im Hauptspeicher, d.h. Bordspeicher, noch für die Weiterübertragung vorgesehene Daten gespeichert, aus Platzgründen nicht jedoch im als Zwischenspeicher dienenden Speichermedium, so kann in letzterem eine entsprechende Information gespeichert sein, so daß die restlichen Daten noch zu einem gewünschten Zeitpunkt abgerufen werden können.

Die Herstellungskosten der verwendeten Fahrzeugkomponenten (Speicher im Schlüssel) sind dabei gering und es muß nur eine geeignete Schnittstelle, z.B. Bluetooth-Schnittstelle, vorgesehen werden, mittels der im Hauptspeicher eingeschriebene Daten abgerufen werden können. Es können so Informationen über das gespeicherte Fehlerverhalten von Fahrzeugkomponenten und aggregaten oder weitere Fahrzeugzustandsdaten übermittelt werden, wodurch der Service-Berater Daten als Grundlage für den Werkstattauftrag erhält. Anhand der Daten kann er beim Fahrer bezüglich aufgetretener Fehler noch nachfragen und so den Werkstattauftrag wesentlich kompetenter erstellen. Der Service-Berater und der Mechaniker in der Werkstatt werden so bei ihrer Arbeit entlastet. Infolge der qualifizierten, Fahrzeugdaten enthaltenden Beauftragung kann in den meisten Fällen ein Diagnosekurztest entfallen.

Wird zur Datenübertragung aus dem Fahrzeug heraus ein Funksender verwendet, so ist das Speicherproblem reduziert. Beispielsweise kann ein ohnehin vorhandenes eingebautes Autotelefon oder ein entsprechend angeschlossenes Mobiltelefon verwendet werden. Fallen während der Fahrt des Fahrzeugs neue Fehlerspeicher-, Check-Control- oder wichtige Fahrzeugzustandsdaten an, werden diese z.B. per SMS an einen Provider oder z.B. einen zentralen Händler-Rechner gesendet und mittels Fahrgestellnummer abgespeichert. Je nach Kennzeichnung können die Daten abgelegt und/oder an einen gewünschten Adressaten (Händler/ Service-Station, Callcenter, etc.) sofort weitergegeben werden, um einen Termin vorzubereiten. Wird von dem Fahrer eine Service-Station aufgesucht oder ist dies geplant, so kann diese die Daten z.B. von der Provider-Datenbank abrufen.

Dabei kann vorgesehen werden, daß ggf. nicht alle zur Übertragung vorgesehenen Daten aus dem Bordspeicher gesendet werden, wobei die gesendeten Daten dann die Information enthalten, daß es noch weitere abrufbare Übertragungsdaten gibt.

Nachdem lediglich die Fahrgestellnummer gespeichert wird und ansonsten nur Fehlerdaten übermittelt werden, ist es möglich, das Fahrzeug laufend zu überwachen und die Daten entsprechend aktuell vorzuhalten, ohne daß es Datenschutzprobleme gibt. Vorzugsweise werden die in der Provider-Datenbank gespeicherten Daten z.B. nach der Abfrage gelöscht, somit sind die anfallenden Speicherkosten relativ gering.

Die Fahrzeugdaten können auch durch Fahrerbefehl oder Aufforderung der Service-Station bei Hofeinfahrt gesendet und im Zentralspeicher der Service-Station gespeichert werden. Geht das zu schnell oder nicht vollständig oder sind seit der letzten Datenübertragung zusätzliche Daten aufgelaufen, kann z.B. das Bordnetz noch eine Stunde aktiv gelassen werden, um die restlichen, noch nicht aus dem Bordspeicher übermittelten Daten vom Service-Beraterarbeitsplatz aus abzurufen.

Es kann auch vorgesehen werden, daß aus dem Schlüssel oder zentralen Datenspeicher gespeicherte Fahrzeugdaten oder Teildaten an die Werkstatt übermittelt werden, ggf. nur Fahrgestellnummer. Der Händler bzw. die Service-Station, soweit berechtigt, ruft dann die übrigen Fahrzeugdaten vom zentralen Datenspeicher oder der Händler-Datenbank ab. Die Fahrzeugdaten liegen dem Service-Berater vor, wenn der Fahrer zu ihm kommt.

Das erfindungsgemäße Verfahren ermöglicht es, aufgetretene Fehler und Abnormitäten nach bestimmten Kriterien zu kategorisieren, etwa nach Wichtigkeit (Sicherheitsfehler, Kurzzeitfehler, nur komfortrelevante Fehler) und zu übertragen. Auch können Verschleißdaten mit erfaßt und übertragen werden, um die Beurteilung des Fahrzeugzustandes zu verbessern und evtl. vorbeugende Maßnahmen treffen zu können, z.B. vor Auftreten eines Defekts einen Teileaustausch durchzuführen. Auch kann nach Bewerten der übertragenen Daten in einer Zentrale wie z.B. Service-Station zur Fehlerbeseitigung ein Datenpaket mit einem Fehlerbeseitigungsprogramm zum Fahrzeug übertragen werden. Ein solches Programm kann dazu beitragen, einen ansonsten erforderlichen Werkstattbesuch auf einen späteren Zeitpunkt zu verschieben oder ihn sogar unnötig machen.

Es können ferner Wartungs- und Reparaturdaten eines Fahrzeugs in einer zentralen Datenbank (z.B. Provider-Datenbank, Händler-Rechner) hinterlegt werden, auf die jede Werkstatt zugreifen kann, statt ein Service-Heft einzusehen. Besteht für den Fahrzeugbesitzer ein persönlicher Zugang per Internet zu dem genannten Zentralrechner (Portal), so kann auch dieser auf seine (Fahrzeug-)Wartungsdaten direkt zugreifen. Damit kann das übliche Service-Heft entfallen, da damit alle Angaben (Händler, Kilometerstand, Datum, Wartungsumfang, etc.) zur Verfügung stehen.

Eine weitere Anwendung des erfindungsgemäßen Verfahrens besteht in einer Fahrzeugabfrage von einer Zentrale wie z.B. dem Hersteller. Dieser kann z.B. Fahrzeugszustandsdaten unter Einhaltung der Datenschutzvorschriften zu Zwecken der Qualitätskontrolle abfragen. Auf diesem Wege können auch z.B. Softwareupdates in den Bordrechner des Fahrzeugs eingespielt werden.

Das Verfahren der gemäß der Erfindung wird im folgenden anhand von zwei Ausführungsvarianten und der Zeichnung weiter erläutert. In der Zeichnung zeigen
- Fig. 1: ein Flußdiagramm zur Veranschaulichung des Ablaufs einer ersten Variante des erfindungsgemäßen Verfahrens und
- Fig. 2: ein Flußdiagramm zur Veranschaulichung des Ablaufs einer zweiten Variante des erfindungsgemäßen Verfahrens.

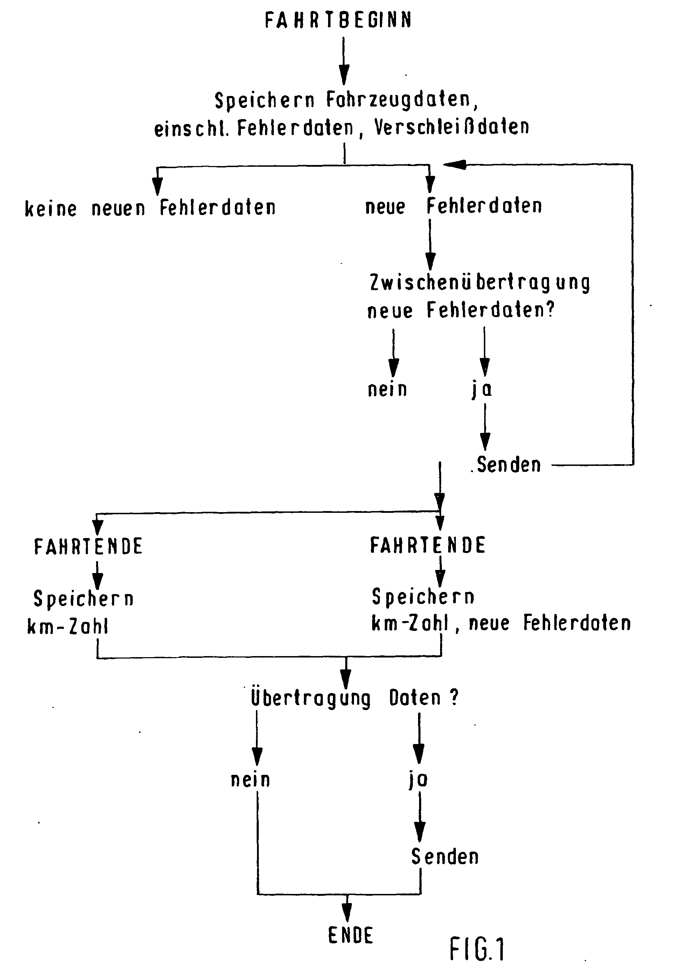

Das bei der in Fig. 1 veranschaulichten Ausführungsvariante des erfindungsgemäßen Verfahrens verwendete Fahrzeug ist mit einem zentralen Datenspeicher für die Fahrzeugdatenerfassung, z.B. Fahrzeugdiagnose ausgestattet. Ferner hat es ein eingebautes Autotelefon und der Fahrzeugschlüssel ist mit Transponder einschließlich Speicher versehen.

Bei Fahrtbeginn werden die Fahrzeugdaten in den Speicher des Fahrzeugschlüssels eingeschrieben. Es handelt sich bei den Fahrzeugdaten im wesentlichen um Fahrgestellnummer, Kilometerstand, Fehlerspeicher-, Fahrzeugzustandsdaten und Check-Control-Daten. Wenn während der Fahrt keine Fehler oder sonstigen besonderen Ereignisse auftreten, wird bei Fahrtende lediglich der Kilometerstand im Fahrzeugschlüsselspeicher aktualisiert.

Tritt während der Fahrt eine Abnormität oder ein Fehler auf, so werden die betreffenden Daten in Fehlerdateien im zentralen Datenspeicher gespeichert. Wahlweise erfolgt eine Zwischenspeicherung der geänderten Daten im Speicher des Schlüssels. Dies wiederholt sich, je nachdem, ob weitere Fehler oder Abnormitäten auftreten oder nicht. Bei Fahrtende werden außer dem Kilometerstand die Fehlerdaten im Fahrzeugschlüsselspeicher aktualisiert, sofern dies nicht während der Fahrt erfolgt ist.

Es kann ferner vorgesehen sein, die Fahrzeugdaten, einschließlich Fehlerdaten mit Auftreten von Fehlern oder Abnormitäten praktisch sofort oder am Ende der Fahrt zu übertragen. Hierzu wird vom Autotelefon Gebrauch gemacht. Der Befehl kann über eine vorherige Dateneingabe erfolgen, so daß automatisch ein Sendevorgang, beispielsweise über SMS ausgelöst wird. Alternativ kann eine Meldung an den Fahrer ergehen (optisches oder akustisches Warnsignal), der entscheidet, ob er ein sofortiges Senden der Daten wünscht. Als Empfänger kommen in Frage z.B. eine bestimmte oder vom Fahrzeugstandort abhängig noch auszuwählende Service-Station, ein Call-Center, das die empfangenen Daten speichert und einer entsprechenden Service-Station die Daten auf Anforderung übermittelt. Es wird so die Möglichkeit zu einer laufenden Qualitätssicherung geschaffen.

Will der Fahrer keine Daten übertragen, so kann er die Daten über den Fahrzeugschlüssel an die Service-Station übermitteln. Dies kann beispielsweise dadurch geschehen, daß er den Fahrzeugschlüssel einem Service-Berater übergibt und dieser den Schlüssel in ein Lesegerät steckt und die Daten mittels des Transponders ausliest.

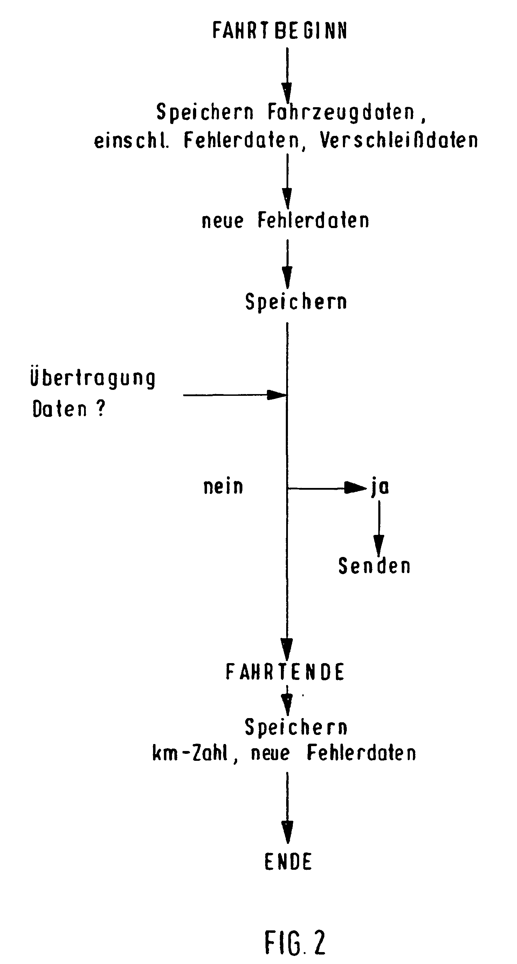

Die in Fig. 2 veranschaulichte Variante des erfindungsgemäßen Verfahrens unterscheidet sich im wesentlichen von der vorhergehend beschriebenen darin, daß eine Datenübertragung durch einen fahrzeugextemen Befehl ausgelöst wird. Weitere Verfahrensschritte wie Zwischenspeicherung sind zu Zwecken der Klarheit bei der Darstellung fortgelassen worden.

Wie bei der vorhergehend beschriebenen Ausführungsvariante werden während der Fahrt, auftretende Fehler im zentralen Datenspeicher, d.h. Bordrechner, des Fahrzeugs gespeichert. Das betreffende Fahrzeug ist mit einer Fahrzeugdatenfernabfrageeinrichtung ausgestattet, d.h. exportfähige Daten werden im Bordspeicher bereitgestellt. Erfolgt beispielsweise von einer Service-Station oder dem Hersteller, die über eine Abfrageautorisierung verfügen, eine Datenübertragungsanforderung, so werden die bereitgestellten Daten übertragen. Erfolgt die Anforderung seitens eines nicht autorisierten Dritten, werden keine Daten übertragen.

## Patentansprüche

1. Verfahren zur drahtlosen Übermittlung von Fahrzeugdaten zum Zwecke der Fahrzeug-Wartung und/oder -Reparatur, bei dem für den Datenexport vorgesehene Fahrzeugdaten in einem Speichermedium gespeichert, im Rahmen einer Fahrzeugdatenerfassung ausgelesen und übertragen werden,
**dadurch gekennzeichnet, daß**
zu Fahrtbeginn der Hauptteil der für den Datenexport vorgesehenen Fahrzeugdaten im Speichermedium gespeichert oder für ein späteres Auslesen bereitgestellt werden und
am Fahrtende lediglich Aktualisierungen des zu Fahrtbeginn im Speicher gespeicherten und/oder bereitgestellten Hauptteils der Daten und/oder Ergänzungen zu dem Hauptteil der Daten durchgeführt werden.

2. Verfahren nach Anspruch 1, **dadurch gekennzeichnet, daß** Änderungen und/oder Ergänzungen des zu Fahrtbeginn im Speicher gespeicherten und/oder bereitgestellten Hauptteils der Daten bereits während der Fahrt durchgeführt werden und zu Fahrtende lediglich eine Aktualisierung der Daten erfolgt.

3. Verfahren nach Anspruch 1 oder 2, **dadurch gekennzeichnet, daß** als Speichermedium ein transportables Datenspeichermedium oder ein mit einem Speicher ausgestatteter Autoschlüssel verwendet wird.

4. Verfahren nach einem der Ansprüche 1 bis 3, **dadurch gekennzeichnet, daß** die Datenübertragung über Transponder oder über Funk, insbesondere Autotelefon, erfolgt.

5. Verfahren nach einem der Ansprüche 1 bis 4, **dadurch gekennzeichnet, daß** die Datenübertragung durch einen Befehl des Fahrers ausgelöst wird.

6. Verfahren nach einem der Ansprüche 1 bis 5, **dadurch gekennzeichnet, daß** die Datenübertragung nach Autorisierung durch einen fahrzeugexternen Befehl erfolgt.

7. Verfahren nach einem der Ansprüche 1 bis 6, **dadurch gekennzeichnet, daß** die Daten auf einen externen Speicher übertragen werden und von diesem Speicher ausgelesen und fernübertragen werden.

8. Verfahren nach Anspruch 7, **dadurch gekennzeichnet, daß** die Daten im externen Speicher nach der Datenabfrage gelöscht werden.

9. Verfahren nach einem der Ansprüche 1 bis 8, **dadurch gekennzeichnet, daß** das Bordnetz des Fahrzeugs nach Fahrtende für eine vorbestimmte Zeitdauer aktiviert bleibt.

10. Verfahren nach einem der Ansprüche 1 bis 9, **dadurch gekennzeichnet, daß** die übertragenen Daten in einer Zentrale bewertet werden und ein Fehlerbeseitungsprogramm, insbesondere per Datenpaket, zum Fahrzeug zurückübertragen wird.

## Revendications

1. Procédé de transmission sans fil de données d'un véhicule dans le but de la maintenance et/ou la réparation, selon lequel des données, prévues pour une diffusion, sont mémorisées dans un support de mémoire, sont lues dans le cadre d'un enregistrement des données du véhicule puis transmises,
**caractérisé en ce qu'**
au début du déplacement, on mémorise dans le support de mémoire l'élément principal des données du véhicule prévues pour sa diffusion ou on le prépare pour une lecture ultérieure, et
à la fin du déplacement, on réalise uniquement des actualisations de l'élément principal des données mémorisées au début du déplacement et/ou préparées, et/ou on apporte des compléments à l'élément principal des données.

2. Procédé selon la revendication 1,
**caractérisé en ce que**
pendant le déplacement, on apporte déjà des modifications et/ou des compléments l'élément principal mémorisé dans la mémoire au début du déplacement et/ou préparé, et on effectue uniquement une actualisation des données à la fin du déplacement.

3. Procédé selon la revendication 1 ou 2,
**caractérisé en ce que**
comme support de mémoire, on utilise un support de mémoire de données transportable ou une clé de voiture équipée d'une mémoire.

4. Procédé selon l'une des revendications 1 à 3,
**caractérisé en ce que**
la transmission de données s'effectue par transpondeur ou par radio, en particulier à l'aide d'un téléphone de voiture.

5. Procédé selon l'une des revendications 1 à 4,
**caractérisé en ce que**
la transmission de données est déclenchée par un ordre du conducteur.

6. Procédé selon l'une des revendications 1 à 5.
**caractérisé en ce que**
la transmission de données s'effectue après une autorisation par un ordre externe au véhicule.

7. Procédé selon l'une des revendications 1 à 6,
**caractérisé en ce que**
les données sont transférées sur une mémoire externe et lues et télé-transmises par cette mémoire.

8. Procédé selon la revendication 7,
**caractérisé en ce que**
les données sont effacées de la mémoire externe après l'interrogation.

9. Procédé selon l'une des revendications 1 à 8,
**caractérisé en ce que**
le réseau de bord du véhicule reste activé pendant une durée prédéterminée après la fin du déplacement.

10. Procédé selon l'une des revendications 1 à 9,
**caractérisé en ce que**
les données transmises sont analysées dans un poste central et un programme de débogage, en particulier par paquet de données, est retransmis au véhicule.

## Claims

1. A method for wirelessly transmitting vehicle data for the purpose of vehicle maintenance and/or repair, in which vehicle data provided for data export is stored in a storage medium, read out within the framework of vehicle data acquisition and transmitted, **characterised in that** at the beginning of the journey, the main part of the vehicle data provided for data export is stored in the storage medium or provided to be read out later and, at the end of the journey, only updates to the main part of the data stored in the memory and/or provided at the beginning of the journey and/or additions to the main part of the data are carried out.

2. A method according to claim 1, **characterised in that** changes and/or additions to the main part of the data stored in the memory and/or provided at the beginning of the journey are already carried out during the journey and at the end of the journey, the data is only updated.

3. A method according to claim 1 or 2, **characterised in that** a transportable data storage medium or a car key equipped with a memory is used as the storage medium.

4. A method according to any one of claims 1 to 3, **characterised in that** the data transmission takes place via a transponder or via radio, especially a car telephone.

5. A method according to any one of claims 1 to 4, **characterised in that** the data transmission is triggered by a command from the driver.

6. A method according to any one of claims 1 to 5, **characterised in that** the data transmission takes place after authorisation by a command which is external to the vehicle.

7. A method according to any one of claims 1 to 6, **characterised in that** the data is transmitted to an external memory and read out from this memory and telecommunicated.

8. A method according to claim 7, **characterised in that** the data is deleted in the external memory after the data extraction.

9. A method according to any one of claims 1 to 8, **characterised in that** the electrical system of the vehicle remains activated after the end of the journey for a predetermined period.

10. A method according to any one of claims 1 to 9, **characterised in that** the transmitted data is evaluated in a control centre and a fault elimination program is transmitted back to the vehicle, more especially by data packet.
